# EUROPÄISCHE PATENTSCHRIFT

(11) **EP 1 678 797 B1**
(45) Veröffentlichungstag und Bekanntmachung des Hinweises auf die Patenterteilung: **14.04.2010**
(21) Anmeldenummer: 04765904.0
(22) Anmeldetag: 08.10.2004
(51) Int. Cl.: H02G 3/08

(54) **WANDAUSLASSDOSE**
WALL OUTLET
PRISE DE SORTIE MURALE

(30) Priorität: 29.10.2003 DE 10350433
(43) Veröffentlichungstag der Anmeldung: 12.07.2006
(73) Patentinhaber: ADC GmbH, 14167 Berlin (DE); Harting Electric GmbH & Co. KG, 32339 Espelkamp (DE)
(72) Erfinder: HETZER, Ulrich, 15831 Mahlow (DE); Mossner, Frank, 12277 Berlin (DE); NAD, Ferenc, 14197 Berlin (DE)
(86) Internationale Anmeldenummer: PCT/EP2004/011307
(87) Internationale Veröffentlichungsnummer: WO 2005/048431

(56) Entgegenhaltungen:
- EP-A- 1 170 842
- DE-C- 19 604 564
- GB-A- 2 300 764

## Beschreibung

Die Erfindung betrifft eine Wandauslassdose gemäß dem Oberbegriff des Patentanspruchs 1.

Wandauslassdosen werden beispielsweise im industriellen Bereich in Produktionshallen eingesetzt. Diese umfassen ein Unterteil und einen Deckel. Das Unterteil wird an der Wand befestigt, wobei der Deckel beispielsweise mittels eines Scharniers an dem Unterteil angelenkt ist und mit dem Unterteil gegebenenfalls verschraubt ist. Deckel und/oder Unterteil weisen eine erste Öffnung auf, über die ein elektrisches Kabel in die Wandauslassdose geführt werden kann. Des Weiteren weist der Deckel und/oder das Unterteil mindestens eine zweite Öffnung auf, in der eine elektrische Buchse angeordnet ist. Dabei kann die Buchse von außen oder von innen vor die zweite Öffnung gesetzt werden. Das elektrische Kabel wird dann mit der Buchse verbunden. Durch Stecken eines geeigneten Steckers in die Buchse kann dann ein elektrisches Gerät mit dem Kabel verbunden werden, um so Daten zu empfangen und/oder zu übertragen. Weiter ist es bekannt, vor der Buchse eine Schutzkappe vorzusehen, die im ungesteckten Zustand die Buchse vor Schmutz und/oder Feuchtigkeit und/oder Spritzwasser schützt. Nachteilig an den bekannten Wandauslassdosen ist, dass diese für Datenkabel mit sehr hohen Übertragungsraten wie beispielsweise Kat 5 oder Kat 6 nicht geeignet sind.

Aus der DE 196 04 654 C1 ist eine gattungsgemäße Anschlussdose bekannt, umfassend ein Unterteil mit mindestens einer ersten Öffnung zur Aufnahme eines elektrischen Kabels und einem Deckel, wobei der Deckel mindestens eine zweite Öffnung aufweist, in die eine elektrische Buchse einsetzbar ist, wobei in dem Unterteil ein Kabelführungselement angeordnet ist, mittels dessen das elektrische Kabel von der ersten Öffnung zur zweiten Öffnung definiert führbar ist.

Eine ähnliche Anschluss-Box ist aus der GB 2 300 764 A bekannt.

Aus der EP 1 170 842 A1 ist ein Industrie-Gehäuse bekannt, wo zwischen einem Unterteil und einem Deckel eine Dichtung angeordnet ist, wobei Löcher für Befestigungsschrauben außerhalb der Dichtung angeordnet sind.

Der Erfindung liegt das technische Problem zugrunde, eine Wandauslassdose zu schaffen, mittels derer Datenkabel für hohe Übertragungsraten anschließbar sind.

Die Lösung des technischen Problems ergibt sich durch den Gegenstand mit den Merkmalen des Patentanspruchs 1. Weitere vorteilhafte Ausgestaltungen der Erfindung ergeben sich aus den Unteransprüchen.

Hierzu ist in dem Unterteil ein Kabelführungselement angeordnet, mittels dessen das elektrische Kabel von der ersten zur zweiten Öffnung definiert geführt ist. Der Erfindung liegt dabei die Erkenntnis zugrunde, dass bei elektrischen Kabeln für hohe Übertragungsraten wie beispielsweise Kat 6 Knicke oder Biegungen unterhalb bestimmter Biegeradien zu vermeiden sind. Dies wird durch das Kabelführungselement im Bereich der Wandauslassdose zwangsweise sichergestellt.

Weiter sind an dem Unterteil an beiden Stirnflächen scharnierartige Achsen angeordnet, wobei der Deckel an der den zweiten Öffnungen entgegengesetzten Stirnfläche mit zu den scharnierartigen Achsen korrespondierenden Befestigungsmitteln ausgebildet ist. Somit kann der Deckel wahlweise an beiden Stirnflächenseiten des Unterteils angelenkt werden, so dass wahlweise sich die ersten und zweiten Öffnungen an der gleichen oder entgegengesetzten Stimflächenseite befinden.

In einer bevorzugten Ausführungsform ist das Kabelführungselement lösbar mit dem Unterteil verbunden. Neben der einfachen Herstellung sowie einem weiteren Freiheitsgrad bei der Wahl von unterschiedlichen Materialien von Unterteil und Kabelführungselement hat dies im Zusammenhang mit der wahlweisen Anlenkung des Deckels den weiteren Vorteil, dass das Kabelführungselement im Unterteil umgedreht werden kann.

In einer weiteren bevorzugten Ausführungsform ist an dem Deckel eine schwenkbare Klappe angeordnet, mittels derer die zweite Öffnung verschließbar ist. Hierdurch wird erreicht, dass ohne gesteckten Stecker kein Schmutz oder keine Feuchtigkeit in die Buchse eindringen kann. Hierzu ist die Klappe vorzugsweise mittels einer Feder vorgespannt.

In einer weiteren bevorzugten Ausführungsform ist die Klappe mit einer Rastmulde und der Deckel mit einer Rastnase ausgebildet, so dass zusätzlich die zugeklappte Klappe verrastet ist.

In einer weiteren bevorzugten Ausführungsform sind das Unterteil mit zwei ersten Öffnungen und der Deckel mit zwei zweiten Öffnungen ausgebildet, so dass mittels der Wandanschlussdose zwei elektrische Kabel anschließbar sind.

In einer weiteren bevorzugten Ausführungsform ist das Kabelführungselement mit federförmigen Elementen ausgebildet. Mittels der federförmigen Elemente wird das Kabelführungselement bzw. die mit dem Kabelführungsetement verbundenen Buchsen definiert zur zweiten Öffnung ausgerichtet.
In einer weiteren bevorzugten Ausführungsform ist der Deckel mit Verplombungshaken ausgebildet. Durch diese Verplombungshaken kann dann bei geschlossenen Klappen, wenn also keine Stecker gesteckt sind, die Wandauslassdose verplombt werden, so dass ein unbefugter Zugriff erschwert wird.

In einer weiteren bevorzugten Ausführungsform ist zwischen Unterteil und Deckel eine Dichtung angeordnet, wobei vorzugsweise Bohrungen für Befestigungsschrauben außerhalb der Dichtung angeordnet sind.

In einer weiteren bevorzugten Ausführungsform sind auf der Unterseite des Deckels und/oder auf der Oberseite des Unterteils Montagehinweise aufgebracht. Diese dienen beispielsweise dazu, dem Monteur anzuzeigen, bis wohin das elektrische Kabel abzuschneiden ist.

In einer weiteren bevorzugten Ausführungsform ist der Deckel mit einer Abdeckung ausgebildet, wobei die Abdeckung mit einer Dichtung ausgebildet ist. Unter der Abdeckung, die vorzugsweise transparent ist, können beispielsweise Beschriftungen angeordnet werden, die dann aufgrund der Dichtung vor Spritzwasser und Feuchtigkeit geschützt sind.

In einer weiteren bevorzugten Ausführungsform ist an mindestens einer Stirnfläche des Unterteils mindestens eine scharnierartige Achse angeordnet und der Deckel mit einem korrespondierendem Befestigungsmittel ausgebildet, wobei die scharnierartige Achse mit einer Rastvertiefung und das korrespondierende Befestigungsmittel mit einer Rastnase ausgebildet ist, so dass der Deckel beim Hochklappen über einen Grenzwert einrastet. Vorzugsweise liegt der Grenzwert im Bereich von 160°. Dies vereinfacht insbesondere nachträgliche Montagearbeiten, da der Deckel quasi in eine nichtstörende Arbeitsposition bewegt werden kann, aber weiterhin verlieirsicher am Unterteil befestigt ist. Somit muss beispielsweise der Deckel nicht auf einen gegebenenfalls feuchten Boden gelegt werden.

Die Erfindung wird nachfolgend anhand eines bevorzugten Ausführungsbeispieles näher erläutert. Die Fig. zeigen:
- Fg. 1: eine perspektivische Draufsicht auf einen Deckel,
- Fig. 2: eine perspektivische Unteransicht des Deckels,
- Fig. 3: eine perspektivische Draufsicht auf ein Unterteil mit eingesetztem Kabelführungselement sowie Buchsen in einer ersten Betriebsart,
- Fig. 4: eine perspektivische Draufsicht auf das Unterteil mit eingesetztem Kabelführungselement sowie Buchsen in einer zweiten Betriebsart,
- Fig. 5: eine weitere perspektivische Draufsicht auf das Unterteil,
- Fig. 6: eine perspektivische Draufsicht auf das Kabelführungselement und
- Fig. 7: eine perspektivische Unteransicht auf das Kabelführungselement.

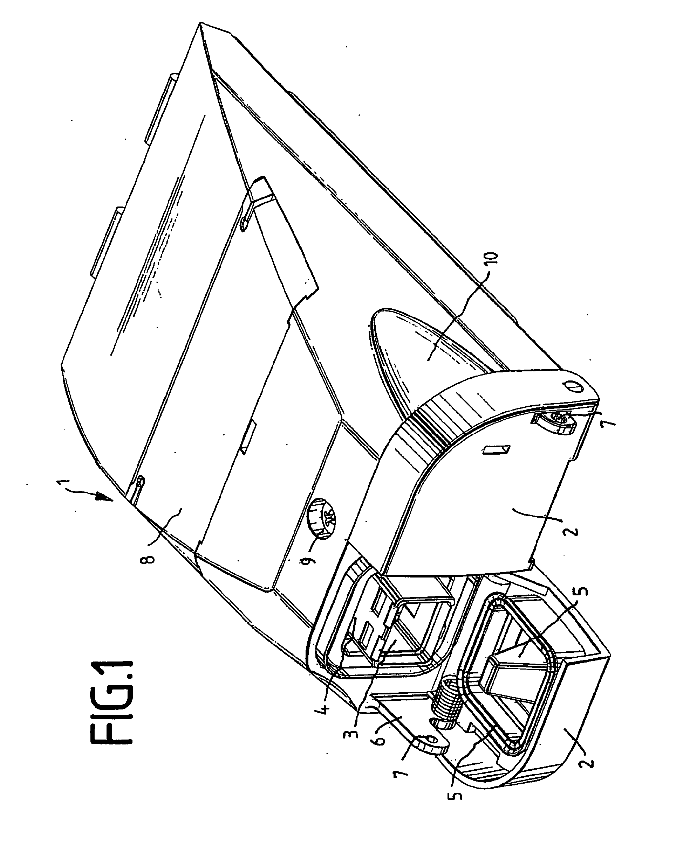

In der Fig. 1 ist der Deckel 1 der Wandauslassdose dargestellt. Der Deckel 1 umfasst zwei Klappen 2, mittels derer zweite Öffnungen 3 in einer Stirnfläche des Deckels 1 verschließbar sind. Dabei ist die rechte Klappe 2 im geschlossenen Zustand und die linke Klappe 2 im geöffneten Zustand dargestellt. In die zweite Öffnung ist ein Aufsatz 4 eingesteckt, der auf einen einzusteckenden Stecker abgestimmt ist. Hinter diesem Aufsatz 4 ist dann eine Buchse angeordnet, was später noch näher erläutert wird. An der Innenseite der Klappe 2 sind Dichtelement 5 angeordnet, die im geschlossenen Zustand die Öffnung 3 mit Aufsatz 4 hermetisch gegen "Feuchtigkeit und Schmutz schützen. Seitlich an der Stirnseite sind zwei Verplombungshaken 6 angeordnet, die im geschlossenen Zustand der Klappe 2 durch Öffnungen in der Klappe 2 herausragen. Durch Löcher 7 innerhalb der Verpbmbungshaken 6 kann dann ein Draht durchgeführt und verplombt werden, so dass ein unbefugter Zugang erschwert bzw. bemerkt wird. Auf der Oberseite des Deckels 1 ist eine Beschriftungsfläche mit Abdeckung 8 angeordnet sowie eine Bohrung 9, mittels derer der Deckel mit dem Unterteil verschraubbar ist. Seitlich am Deckel 1 im Bereich der Klappen 2 sind Mulden 10 ausgeformt, die als Soll-Druckpunkte zum Öffnen der Klappe 2 dienen. Die Klappen 2 sind einerseits durch eine Feder vorgespannt und über eine nicht dargestellte Rastnase am Deckel und eine Rastmulde an der Klappe verrastet. Durch die schräge Krafteinwirkung über die Mulden 10 wird dann die Entrastung vereinfacht.

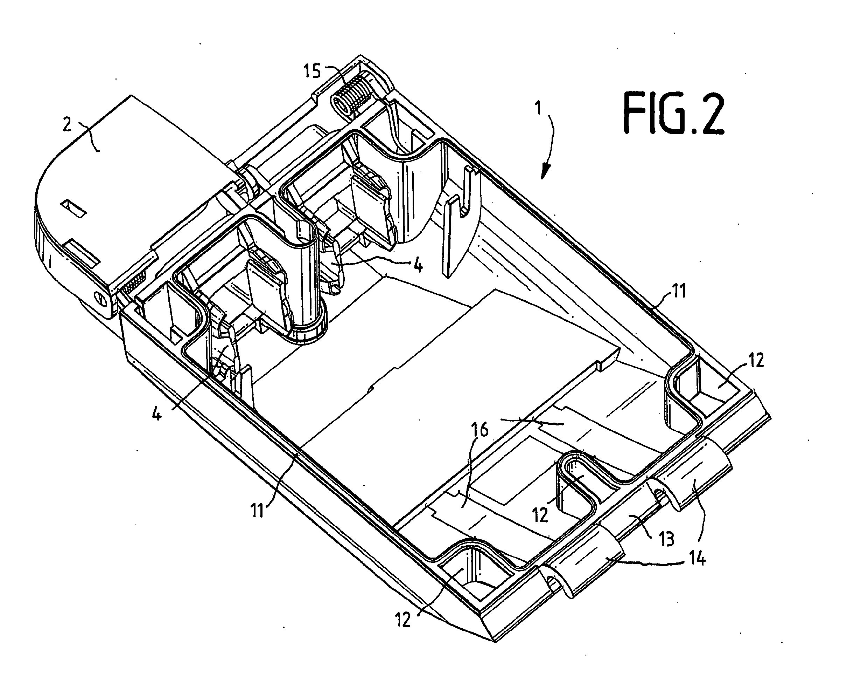

In der Fig. 2 ist der Deckel in einer Unteransicht dargestellt. Dabei verläuft eine Nut 11 für eine Dichtung nahezu um den gesamten Umfang des Deckels 1, wobei die Bohrungen bzw. Löcher 12 für Schrauben außerhalb der Nut 11 angeordnet sind. An der gegenüberliegenden Stirnseite 13 der Klappen 2 sind zwei Befestigungsmittel 14 angeordnet. Auf der Unterseite sind die Befestigungsmittel 14 jeweils mit einer Rastnase ausgebildet, deren Funktion später noch erläutert wird. Wie man weiter erkennt, ragen die beiden Aufsätze 4 in den Deckel hinein. Rechts oben erkennt man die Feder 15, die die Klappe 2 vorspannt. Auf der Unterseite des Deckels 1 sind weiter Montagehilfen 16 aufgebracht, aus denen beispielsweise ersichtlich ist, wie weit ein elektrisches Kabel abgeschnitten bzw. abisoliert werden muss.

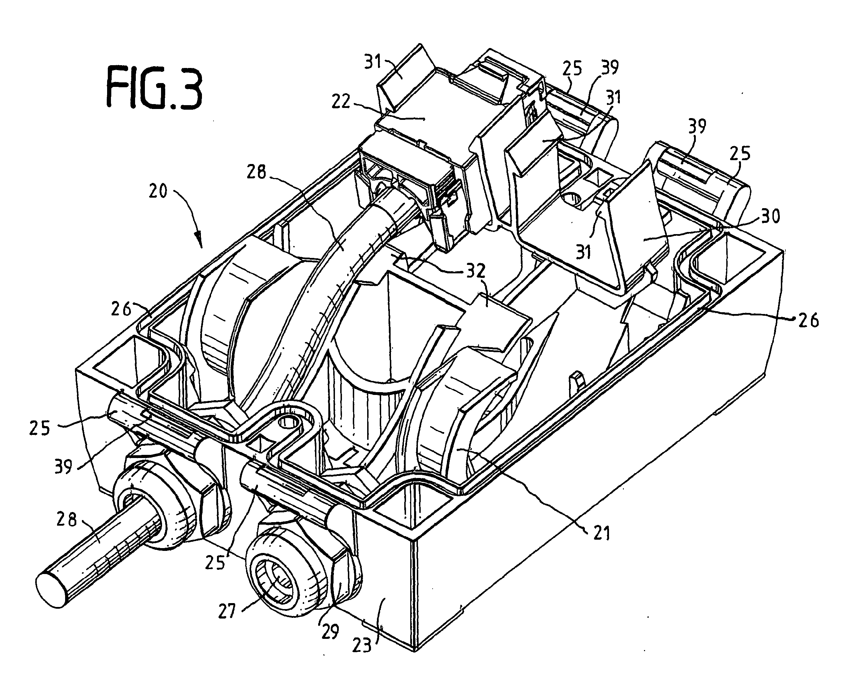

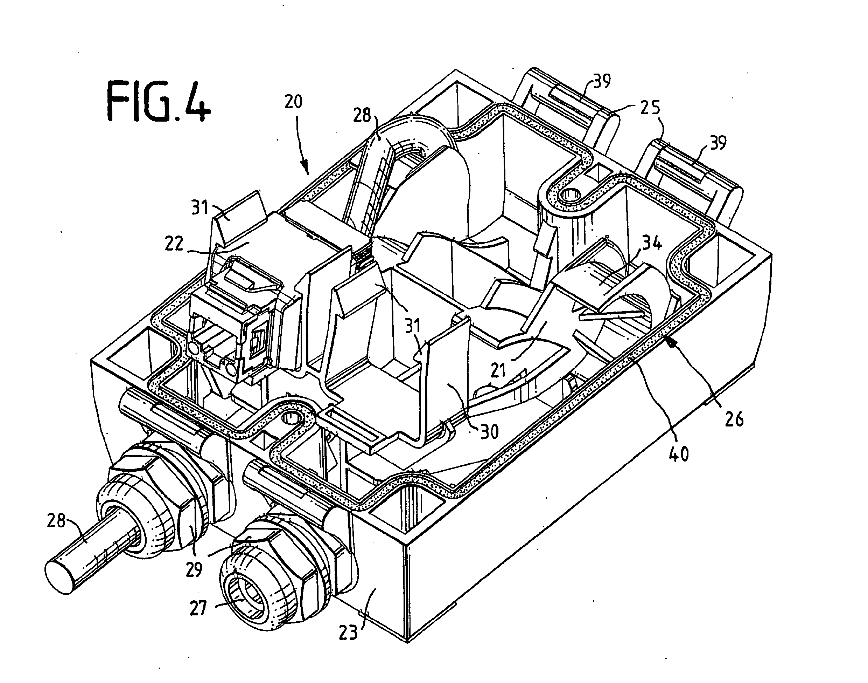

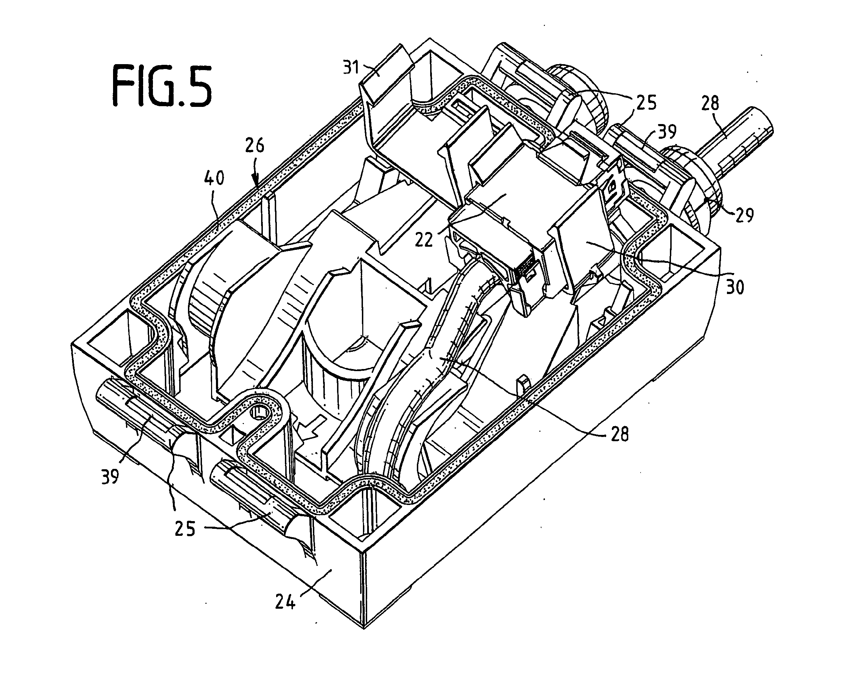

In der Fig. 3 ist das Unterteil 20 der Wandauslassdose mit eingesetztem Kabelführungselement 21 sowie Buchsen 2 dargestellt. An den beiden Stirnseiten 23 bzw. 24 (siehe Fig. 5) sind jeweils zwei scharnierartige Achsen 25 angeordnet, wobei der Deckel 1 mittels der Befestigungsmittel 14 an den scharnierartigen Achsen 25 angelenkt werden kann. Nahezu um den gesamten Umfang des Unterteils 20 ist eine Nut 26 für die Dichtung 40 vorgesehen (siehe Fig. 4 und 5). An der Stirnseite 23 weist das Unterteil 20 zwei erste Öffnungen 27 für die elektrischen Kabel 28 auf, wobei die Öffnungen 27 mit Kabeln 28 mittels Dichtelementen 29 hermetisch abschließbar sind. Das Kabelführungselement 21 ist mit jeweils zwei U-förmigen Schenkeln 30 ausgebildet, die zur Aufnahme und Befestigung der Buchsen 22 dienen. Hierzu sind an der Oberseite der Schenkel 30 nach innen gerichtete Klemmrippen 31 vorgesehen, die sich über die Oberseite derBuchsen 22 schieben. In einer ersten Betriebsart ist das Kabelführungselement 21 derart in dem Unterteil 20 eingesetzt, dass die U-förmigen Schenkel 30 an der Stirnseite 24 liegen. Dies ist in Fig. 3 dargestellt. In diesem Fall wird der Deckel 1 mit den Befestigungsmitteln 14 an den scharnierartigen Achsen 25 an der Stirnseite 23 angelenkt. Dies bedeutet, dass, wenn die Wandauslassdose an der Wand montiert ist und die elektrischen Kabel 28 von oben kommen, dann der Abgriff mittels der nicht dargestellten Stecker von unten erfolgt. Zum definierten Führen des elektrischen Kabels 28 innerhalb der Wandauslassdose wird dieses durch die Öffnung 27 gesteckt und über eine erste Kabelführungsbahn 32 von der Öffnung 27 zur Buchse 22 geführt und dort dir elektrischen Adern des Kabels 28 angeschlossen. Die scharnierartigen Achsen 25 sind jeweils mit einer Rastvertiefung 39 ausgebildet, die vorzugsweise etwas außermittig angeordnet ist. Beim Hochklappen des Deckels 1 über einen Grenzwinkel von beispielsweise 160° rutscht die Rastnase der Befestigungsmittel 14 in die Rastvertiefung und arretiert den Deckel 1 in dieser Position.

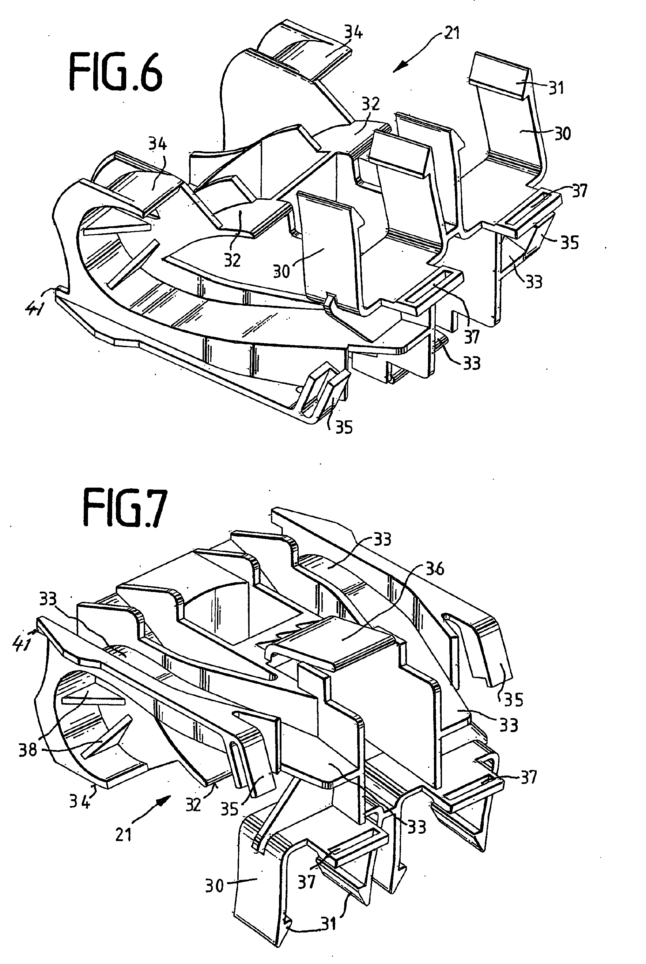

Die Kabelführungsbahn 32 ist derart ausgebildet, dass Mindestbiegeradien des elektrischen Kabels 28 für hohe Datenübertragungsraten wie beispielsweise Kat 6 eingehalten werden. Wie insbesondere in Fig. 6 gut zu erkennen ist, bewirkt die Ausbildung der Kabelführungsbahn 32 eine Zwangsführung, so dass der Monteur das Kabel 28 nicht unterhalb der Mindestbiegeradien biegen oder gar knicken kann.

In der Fig. 4 und 5 ist eine zweite Betriebsart dargestellt, wobei das Kabelführungselement 21 um 180° gedreht in dem Unterteil 21 angeordnet ist, so dass die U-förmigen Schenkel 30 an der Stirnseite 23 angeordnet sind. In diesem Fall wird der Deckel 1 mit seinen Befestigungsmitteln 14 an den scharnierartigen Achsen 25 der Stirnseite 24 angelenkt. Dies erfordert jedoch eine andere Kabelführung innerhalb der Wandauslassdose. Hierzu wird das elektrische Kabel 28 nach der Öffnung 27 zunächst über die Kabelführungsbahn 33 (siehe Fig. 6) von der Stirnseite 23 zur Stirnseite 24 geführt, nach oben gebogen und über die Kabelführungsbahn 34 zur Buchse 22 geführt.

Mittels des lösbaren Kabelführungselementes 21 sowie der an beiden Stirnseiten 23, 24 angeordneten scharnierartigen Achsen 25 kann somit wahlweise der Abgriff mittels des Steckers an der Stirnseite 23 oder 24 erfolgen. Ist beispielsweise die Wandanschlussdose an der Wand befestigt und kommt das elektrische Kabel 28 von unten, so kann durch die zweite Betriebsart gemäß Fig. 4 und 5 dennoch gewährleistet werden, dass auch der Abgriff durch die Stecker von unten erfolgt.

Das Kabelführungselement 21 ist in Fig. 6 und 7 im Detail dargestellt. Neben den bereits beschriebenen Elementen weist das vorzugsweise einstückige Kabelführungselement 21 ein Paar Federelemente 35 auf, die das Kabelführungselement 21 federnd gegen die Innenseite des Unterteils 20 drücken. Des Weiteren weist das Kabelführungselement 21 ein zweites Federelement 36 auf, das das Kabelführungselement 21 federnd gegen die Unterseite des Unterteils abstützt. Dabei bewirkt das federelement 36 eine Höhenausrichtung der Buchsen 22, wobei die Fixierung der Buchse 22 in Längsrichtung primär durch die Anschlagkanten 37 erfolgt. Zur Erhöhung der Steifigkeit ist das Kabelführungselement 21 darüber hinaus im Bereich der Kabelführungsbahn 34 mit Versteifungsrippen 38 ausgebildet. An der den Federelementen 35 gegenüberliegenden Seite ist das Kabelführungselement 21 mit Vorsprüngen 41 ausgebildet, die in entsprechende Ausnehmungen im Unterteil 20 einrasten.

### Bezugszeichenliste

- 1: Deckel
- 2: Klappe
- 3: Öffnung
- 4: Aufsatz
- 5: Dichtelement
- 6: Verplombungshaken
- 7: Löcher
- 8: Abdeckung
- 9: Bohrung
- 10: Mulden
- 11: Nut
- 12: Löcher
- 13: Stirnseite
- 14: Befestigungsmittel
- 15: Feder
- 16: Montagehilfen
- 20: Unterteil
- 21: Kabelführungselement
- 22: Buchsen
- 23: Stirnseite bzw. Stirnfläche
- 24: Stirnseite bzw. Stirnfläche
- 25: scharnierartige Achsen
- 26: Nut
- 27: Öffnung
- 28: Kabel
- 29: Dichtelement
- 30: U-förmige Schenkel
- 31: Klemmrippen
- 32: Kabelführungsbahn
- 33: Kabelführungsbahn
- 34: Kabelführungsbahn
- 35: Federelement
- 36: Federelement
- 37: Anschlagkante
- 38: Versteifungsrippen
- 39: Rastvertiefung
- 40: Dichtung
- 41: Vorsprung

## Patentansprüche

1. Wandauslassdose, umfassend ein Unterteil (20) mit mindestens einer ersten Öffnung (27) an einer Stirnfläche (23, 24) zur Aufnahme eines elektrischen Kabels (28) und einen Deckel (1), wobei der Deckel (1) mindestens eine zweite Öffnung (3) aufweist, in die eine elektrische Buchse (22) einsetzbar ist, wobei in dem Unterteil (20) ein Kabelführungselement (21) angeordnet ist, mittels dessen das elektrische Kabel (28) von der ersten Öffnung (27) zur zweiten Öffnung (3) definiert führbar ist,
**dadurch gekennzeichnet, dass**
an dem Unterteil (20) an beiden Stirnflächen (23, 24) scharnierartige Achsen (25) angeordnet sind und der Deckel (1) an der der zweiten Öffnung (3) entgegengesetzten Stirnfläche mit zu den scharnierartigen Achsen (25) korrespondierenden Befestigungsmitteln (14) ausgebildet ist.

2. Wandauslassdose nach Anspruch 1, **dadurch gekennzeichnet, dass** das Kabelführungselement (21) lösbar mit dem Unterteil (20) verbunden ist.

3. Wandauslassdose nach einem der vorangegangenen Ansprüche, **dadurch gekennzeichnet, dass** an dem Deckel (1) eine schwenkbare Klappe (2) angeordnet ist, mittels derer die zweite Öffnung (3) verschließbar ist.

4. Wandauslassdose nach Anspruch 3, **dadurch gekennzeichnet, dass** die Klappe (2) mit einer Rastmulde und der Deckel (1) mit einer Rastnase ausgebildet sind.

5. Wandauslassdose nach einem der vorangegangenen Ansprüche, **dadurch gekennzeichnet, dass** das Unterteil (20) mit zwei ersten Öffnungen (27) und der Deckel (1) mit zwei zweiten Öffnungen (3) ausgebildet ist.

6. Wandauslassdose nach einem der vorangegangenen Ansprüche, **dadurch gekennzeichnet, dass** das Kabelführungselement (21) mit federförmigen Elementen (35, 36) ausgebildet ist.

7. Wandauslassdose nach einem der vorangegangenen Ansprüche, **dadurch gekennzeichnet, dass** der Deckel mit Verplombungshaken (6) ausgebildet ist.

8. Wandauslassdose nach einem der vorangegangenen Ansprüche, **dadurch gekennzeichnet, dass** zwischen Unterteil (20) und Deckel (1) eine Dichtung (11) angeordnet ist.

9. Wandauslassdose nach Anspruch 8, **dadurch gekennzeichnet, dass** die Löcher (12) für Befestigungsschrauben außerhalb der Dichtung (11) angeordnet sind.

10. Wandauslassdose nach einem der vorangegangenen Ansprüche, **dadurch gekennzeichnet, dass** auf der Unterseite des Deckels (1) und/oder auf der Oberseite des Unterteils (20) Montagehinweise (16) aufgebracht sind.

11. Wandauslassdose nach einem der vorangegangenen Ansprüche, **dadurch gekennzeichnet, dass** der Deckel (1) mit einer Abdeckung (8) ausgebildet ist, wobei die Abdeckung (8) mit einer Dichtung ausgebildet ist.

12. Wandauslassdose nach einem der vorangegangenen Ansprüche, **dadurch gekennzeichnet, dass** an mindestens einer Stirnfläche (23, 24) des Unterteils (20) mindestens eine scharnierartige Achse (25) angeordnet ist und der Deckel (1) mit einem korrespondierenden Befestigungsmittel (14) ausgebildet ist, wobei die scharnierartige Achse (25) mit einer Rastvertiefung (39) und das korrespondierende Befestigungsmittel (14) mit einer Rastnase ausgebildet ist, so dass der Deckel (1) beim Hochklappen über einen Grenzwinkel einrastet.

## Claims

1. Wall outlet box, having a lower part (20) with at least one first opening (27) on an end surface (23, 24) for holding an electrical cable (28) and having a cover (1), with the cover (1) having at least one second opening (3), into which an electrical socket (22) can be inserted, wherein a cable routing element (21) is arranged in the lower part (20), by means of which the electrical cable (28) can be routed in a defined manner from the first opening (27) to the second opening (3), **characterized in that** hinge-like shafts (25) are arranged on both end surfaces (23, 24) on the lower part (20) and, on the end surface opposite the second opening (3), the cover (1) has attachment means (14) which correspond to the hinge-like shafts (25).

2. Wall outlet box according to Claim 1, **characterized in that** the routing element (21) is detachably connected to the lower part (20).

3. Wall outlet box according to one of the preceding claims, **characterized in that** a flap (2) which can pivot is arranged on the cover (1) and can be used to close the second opening (3).

4. Wall outlet box according to Claim 3, **characterized in that** the flap (2) has a latching trough, and the cover (1) has a latching tab.

5. Wall outlet box according to one of the preceding claims, **characterized in that** the lower part (20) has two first openings (27), and the cover (1) has two second openings (3).

6. Wall outlet box according to one of the preceding claims, **characterized in that** the routing element (21) has elements (35, 36) in the form of springs.

7. Wall outlet box according to one of the preceding claims, **characterized in that** the cover has lead-sealing hooks (6).

8. Wall outlet box according to one of the preceding claims, **characterized in that** a seal (11) is arranged between the lower part (20) and the cover (1).

9. Wall outlet box according to Claim 8, **characterized in that** the holes (12) for attachment screws are arranged away from the seal (11).

10. Wall outlet box according to one of the preceding claims, **characterized in that** installation instructions (16) are fitted on the lower face of the cover (1) and/or on the upper face of the lower part (20).

11. Wall outlet box according to one of the preceding claims, **characterized in that** the cover (1) has a lid (8), and the lid (8) has a seal.

12. Wall outlet box according to one of the preceding claims, **characterized in that** at least one hinge-like shaft (25) is arranged on at least one end surface (23, 24) of the lower part (20), and the cover (1) has corresponding attachment means (14), with the hinge-like shaft (25) having a latching depression (39) and the corresponding attachment means (14) having a latching tab, so that the cover (1) latches in over a limiting angle when it is folded up.

## Revendications

1. Boîte d'encastrement, comprenant une partie inférieure (20) avec au moins une première ouverture (27) sur une face frontale (23, 24), pour recevoir un câble électrique (28) et comprenant un couvercle (1), le couvercle (1) présentant au moins une deuxième ouverture (3) dans laquelle peut être insérée une douille électrique (22), un élément de guide-câble (21) étant disposé dans la partie inférieure (20), au moyen duquel le câble électrique (28) peut être guidé de manière définie de la première ouverture (27) vers la deuxième ouverture (3),
**caractérisée en ce que**
des axes de type charnière (25) sont disposés sur les deux faces frontales (23, 24) sur la partie inférieure (20), et le couvercle (1) est réalisé sur la face frontale opposée à la deuxième ouverture (3) avec des moyens de fixation (14) correspondants aux axes de type charnière (25).

2. Boîte d'encastrement selon la revendication 1, **caractérisée en ce que** l'élément de guide-câble (21) est connecté de manière desserrable à la partie inférieure (20).

3. Boîte d'encastrement selon l'une quelconque des revendications précédentes, **caractérisée en ce qu'**un volet pivotant (2) est disposé sur le couvercle (1), lequel permet de fermer la deuxième ouverture (3).

4. Boîte d'encastrement selon la revendication 3, **caractérisée en ce que** le volet (2) est réalisé avec un creux d'encliquetage et le couvercle (1) est réalisé avec un nez d'encliquetage.

5. Boîte d'encastrement selon l'une quelconque des revendications précédentes, **caractérisée en ce que** la partie inférieure (20) est réalisée avec deux premières ouvertures (27) et le couvercle (1) est réalisé avec deux deuxièmes ouvertures (3).

6. Boîte d'encastrement selon l'une quelconque des revendications précédentes, **caractérisée en ce que** l'élément de guide-câble (21) est réalisé avec des éléments en forme de ressort (35, 36).

7. Boîte d'encastrement selon l'une quelconque des revendications précédentes, **caractérisée en ce que** le couvercle est réalisé avec des crochets de scellage (6).

8. Boîte d'encastrement selon l'une quelconque des revendications précédentes, **caractérisée en ce qu'**une garniture d'étanchéité (11) est disposée entre la partie inférieure (20) et le couvercle (1).

9. Boîte d'encastrement selon la revendication 8, **caractérisée en ce que** les trous (12) pour des vis de fixation sont disposés en dehors de la garniture d'étanchéité (11).

10. Boîte d'encastrement selon l'une quelconque des revendications précédentes, **caractérisée en ce que** des instructions de montage (16) sont placées sur le côté inférieur du couvercle (1) et/ou sur le côté supérieur de la partie inférieure (20).

11. Boîte d'encastrement selon l'une quelconque des revendications précédentes, **caractérisée en ce que** le couvercle (1) est réalisé avec un recouvrement (8), le recouvrement (8) étant réalisé avec une garniture d'étanchéité.

12. Boîte d'encastrement selon l'une quelconque des revendications précédentes, **caractérisée en ce qu'**au moins un axe de type charnière (25) est disposé sur au moins une face frontale (23, 24) de la partie inférieure (20) et le couvercle (1) est réalisé avec un moyen de fixation correspond (14), l'axe de type charnière (25) étant réalisé avec un renfoncement d'encliquetage (39) et le moyen de fixation correspondant (14) avec un nez d'encliquetage, de sorte que le couvercle (1) s'encliquète lors du rabattement vers le haut sur un angle limite.
